# EUROPÄISCHE PATENTSCHRIFT

(11) **EP 1 056 185 B1**
(45) Veröffentlichungstag und Bekanntmachung des Hinweises auf die Patenterteilung: **22.10.2003**
(21) Anmeldenummer: 00103483.4
(22) Anmeldetag: 01.03.2000
(51) Int. Cl.: H02K 5/24, F16F 15/08

(54) **Anordnung zur schwingungsisolierenden Halterung eines Elektromotors**
Anti-vibration mounting arrangement for an electric motor
Agencement de support anti-vibration pour un moteur électrique

(30) Priorität: 26.05.1999 DE 29909115 U
(43) Veröffentlichungstag der Anmeldung: 29.11.2000
(73) Patentinhaber: ebm Werke GmbH & Co. KG, 74673 Mulfingen (DE)
(72) Erfinder: Baer, Martin, Dipl.-Ing. (FH), 74673 Mulfingen (DE); Best, Dieter, 74653 Ingelfingen (DE)
(74) Vertreter: Patentanwälte Dr. Solf & Zapf

(56) Entgegenhaltungen:
- DE-U- 7 304 418
- FR-A- 2 740 625
- US-A- 5 761 850

## Beschreibung

Die vorliegende Erfindung betrifft eine Anordnung zur schwingungsisolierenden Halterung eines Elektromotors an einem Trägerteil über mehrere über den Umfang verteilt angeordnete, aus elastischem Material bestehende Zwischenelemente.

Eine solche Motor-Halterung ist beispielsweise in der Druckschrift DE 43 06 588 A1 beschrieben. Bei dieser bekannten Motor-Halterung sitzen elastische Zwischenelemente (Dämpfungselemente) formschlüssig in dem das Motorgehäuse umschließenden Bereich radial zwischen dem Motorgehäuse und einem äußeren Motorhalter. Dazu weist einerseits das Motorgehäuse radial abstehende Haltestege auf, auf die die Dämpfungselemente mit entsprechenden Schlitzen aufgesetzt sind. Andererseits stützt sich jedes Dämpfungselement in Radialrichtung an zwei motorhalterseitigen Stützflächen ab, die jeweils in einem spitzen Winkel zur Radialen verlaufen. Wegen des formschlüssigen Sitzes sind genau angepaßte Dämpfungselemente erforderlich. Zudem müssen auch die übrigen Teile speziell angepaßt sein, d. h. Haltestege, Dämpfungselemente und Stützflächen müssen aufeinander abgestimmt sein, um die gewünschte schwingungsdämpfende Abstützung zu erreichen. Die speziellen, radial abstehenden Haltestege des Motors können -bei- anderen Anwendungen stören, so daß dieser Motor für bestimmte Einsatzfälle nicht eingesetzt werden kann. Aufgrund der speziellen Ausbildung und Anordnung der Dämpfungselemente, wobei sie vom Motorhalter umfaßt werden und die Haltestege in die Dämpfungselemente eingreifen, ist nur eine begrenzte Elastizität vorhanden. Insofern ist die hier erreichte Schwingungsisolation bzw. -dämpfung noch verbesserungswürdig.

Die DE 35 00 867 C2 beschreibt einen Elektromotor, der über einen Haltestreifen befestigt wird, der über zwei diametral gegenüberliegende, klotzartige Elemente aus gummielastischem Werkstoff mit einem Haltewinkel am Motor verbunden ist. Der Haltewinkel ist mit einem Deckel des Motors fest verbunden. Die gummielastischen Elemente sind sowohl mit dem Haltestreifen als auch mit dem Haltewinkel durch Aufvulkanisieren oder Kleben verbunden. Eine solche Motorbefestigung dürfte nur für relativ kleine Motoren anwendbar sein, weil die tragende Verbindung ausschließlich durch Stoffschluß (Vulkanisation oder Verklebung) erfolgt. Zudem führt dies auch zu einer recht aufwendigen Herstellung.

Die DE 36 38 393 C2 beschreibt eine weitere Anordnung zur schwingungsgedämpften Halterung eines Elektromotors. Auch hierbei wird ein Motor über gummielastische Dämpfungselemente an einer Gehäuse- oder Montagewand befestigt. Hierzu sind die Dämpfungselemente in einer Öffnung der Montagewand formschlüssig gehalten. Ferner sind die Dämpfungselemente zwischen dem Motor und einer Befestigungsplatte definiert zusammengedrückt angeordnet. Konkret handelt es sich um vier einzelne, kreisförmige Dämpfungselemente, die in den Eckpunkten eines gedachten Rechteckes liegen und jeweils eine punktförmige Anlage zu dem Motor und der Befestigungsplatte bilden. Deshalb weist diese bekannte Dämpfungsanordnung axial und radial im wesentlichen die gleichen Dämpfungseigenschaften bzw. die gleiche Steifigkeit auf.

Schließlich beschreibt die DE 44 05 577 A1 eine schwingungsdämpfende Anordnung mit einem einstückigen elastischen Dämpferelement, welches im wesentlichen scheibenförmig ausgebildet ist. Dieses Dämpferelement ist einerseits über mehrere, das Dämpferelement durchgreifende Motorschraubverbindungen mit dem Motor sowie andererseits über in Umfangsrichtung versetzt angeordnete Verbindungselemente mit dem Träger verbunden.

US-A-5,761,850 offenbart eine Anordnung mit den Merkmalen des Oberbegriffs des Anspruches 1.

Ausgehend von dem beschriebenen Stand der Technik liegt der vorliegenden Erfindung die Aufgabe zugrunde, eine Anordnung der gattungsgemäßen Art zu schaffen, mit der unabhängig von der Einbaulage des Motors stets eine optimale Schwingungsisolation erreicht wird.

Erfindungsgemäß wird die Aufgabe durch die Merkmale des Anspruchs 1 gelöst. Bevorzugte Ausgestaltungen sind in den abhängigen Ansprüchen definiert. Dabei sind die Stegelemente derart angeordnet und bezüglich ihrer Form und Elastizitätseigenschaften derart ausgelegt, daß die Verbindung zwischen dem Elektromotor und dem Trägerteil in Umfangs- bzw. Drehrichtung des Motors gesehen weicher, d. h. leichter, mit geringerer Kraft verformbar als in allen anderen Raumrichtungen ist.

Es wird erreicht, daß die Abstützung in axialer Richtung eine größere Steifigkeit aufweist als in Umfangs- bzw. Drehrichtung des Motors. Für fünf von insgesamt sechs Freiheitsgraden im Raum (drei translatorische sowie zwei Rotationsfreiheitsgrade) ist die Anbindung des Motors an das jeweilige Trägerteil relativ steif. Bezüglich des letzten Freiheitsgrades, d. h. der Drehrichtung des Motors, wird eine deutlich weichere Abstützung erreicht, weil in dieser Richtung die Stegelemente ausschließlich quer zu ihrer Längserstreckung elastisch verformt werden, denn jeder gedachte Kreis um die Drehachse schneidet die radial angeordneten Stegelemente stets senkrecht. Einerseits kann zwar das Motordrehmoment hinreichend abgestützt werden, andererseits werden aber vorteilhafterweise die störenden Drehmomentrauhigkeiten (Pendelmomente, Rastmonente, Kommutierungsanregungen) effektiv zum Trägerteil hin isoliert bzw. gedämpft.

Die Anordnung eignet sich vor allem für die einseitige, "fliegende" Befestigung von Elektromotoren, beispielsweise Außenläufermotoren für Lüfterantriebe.

Eine Verdrehsicherung des Elektromotors gegen relatives Verdrehen gegen das Trägerteil erfolgt in erster Linie durch einen Reibschluß im System, und zwar vorwiegend durch Haftreibung, wodurch unerwünschte Dämpfungseffekte (nichtlineare Reibungsverluste usw.) vermieden werden. Darüber hinaus können aber auch zusätzliche Verdrehsicherungen und/oder Zentrierhilfen insbesondere durch Formschlußelemente vorhanden sein.

Weitere Ausgestaltungsmerkmale der Erfindung sind in den Unteransprüchen sowie in der folgenden Beschreibung enthalten.

Anhand von in der Zeichnung dargestellten, bevorzugten Ausführungsbeispielen soll die Erfindung nun näher erläutert werden. Dabei zeigen:
- Fig. 1: einen Axialschnitt durch eine erfindungsgemäße Anordnung in einer ersten, bevorzugten Ausführungsform,
- Fig. 2: eine Draufsicht in Pfeilrichtung X gemäß Fig. 1 auf ein Einzelteil der erfindungsgemäßen Anordnung mit elastischen Stegelementen,
- Fig. 3: eine vergrößerte Perspektivansicht eines der erfindungsgemäßen Stegelemente (Bereich III in Fig. 2),
- Fig. 4: ein anderes Einzelteil der Anordnung in Draufsicht (Pfeil X gemäß Fig. 1),
- Fig. 5: einen Schnitt längs der Linie V-V in Fig. 4,
- Fig. 6: eine Ansicht analog zu Fig. 2, jedoch ohne die Stegelemente,
- Fig. 7: einen Schnitt in der Ebene VII-VII gemäß Fig. 6,
- Fig. 8: einen Schnitt längs der Linie VIII-VIII gemäß Fig. 6,
- Fig. 9: eine zweite Ausführungsform der erfindungsgemäßen Anordnung in einer Darstellung analog zu Fig. 1,
- Fig. 10: eine Draufsicht auf die Stegelemente ähnlich der Darstellung in Fig. 2 (Pfeil X gemäß Fig. 9),
- Fig. 11: eine Seitenansicht in Pfeilrichtung XI gemäß Fig. 10,
- Fig. 12: eine Draufsicht eines Einzelteils entsprechend Fig. 4,
- Fig. 13: eine halbgeschnittene Seitenansicht des Einzelteils in Pfeilrichtung XIII gemäß Fig. 12,
- Fig. 14: eine Draufsicht eines Einzelteils analog zur Ausführung nach Fig. 6,
- Fig. 15: eine Seitenansicht in Pfeilrichtung XV gemäß Fig. 14,
- Fig. 16: eine Ansicht analog zu Fig. 2 in einer Ausführungsvariante,
- Fig. 17: einen Schnitt längs der Linie XVII-XVII in Fig. 16,
- Fig. 18: eine Darstellung analog zu Fig. 6 (ohne Stegelemente) in der Ausführungsvariante der Fig. 16 und 17 und
- Fig. 19: einen Schnitt XIX-XIX gemäß Fig. 18.

In den verschiedenen Figuren der Zeichnung sind gleiche bzw. sich funktionell entsprechende Teile und Komponenten stets mit den gleichen Bezugszeichen versehen und werden daher in der Regel auch jeweils nur einmal beschrieben.

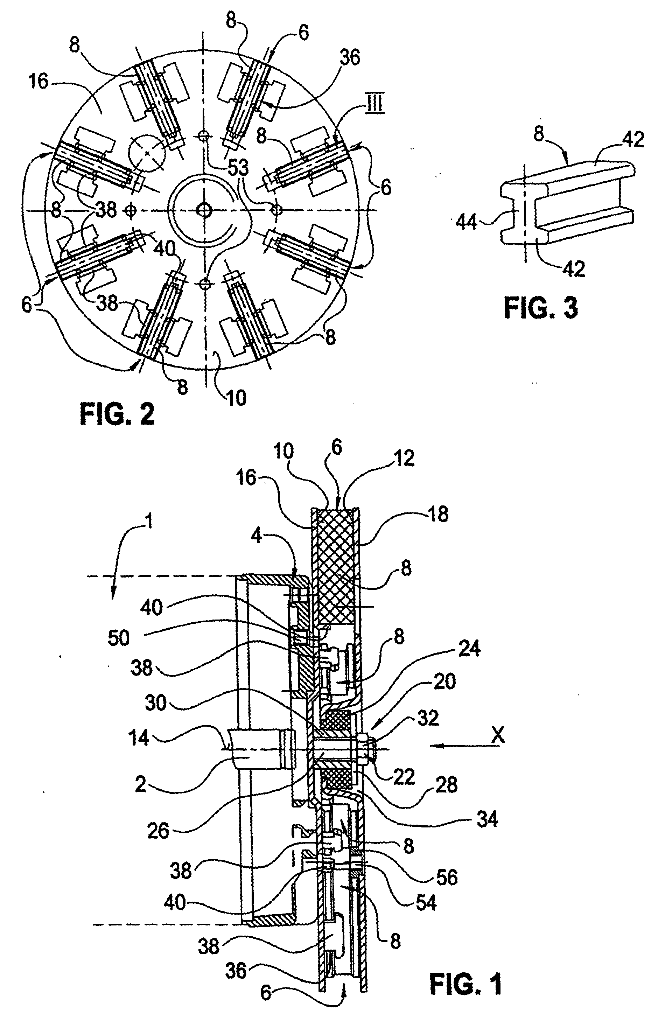

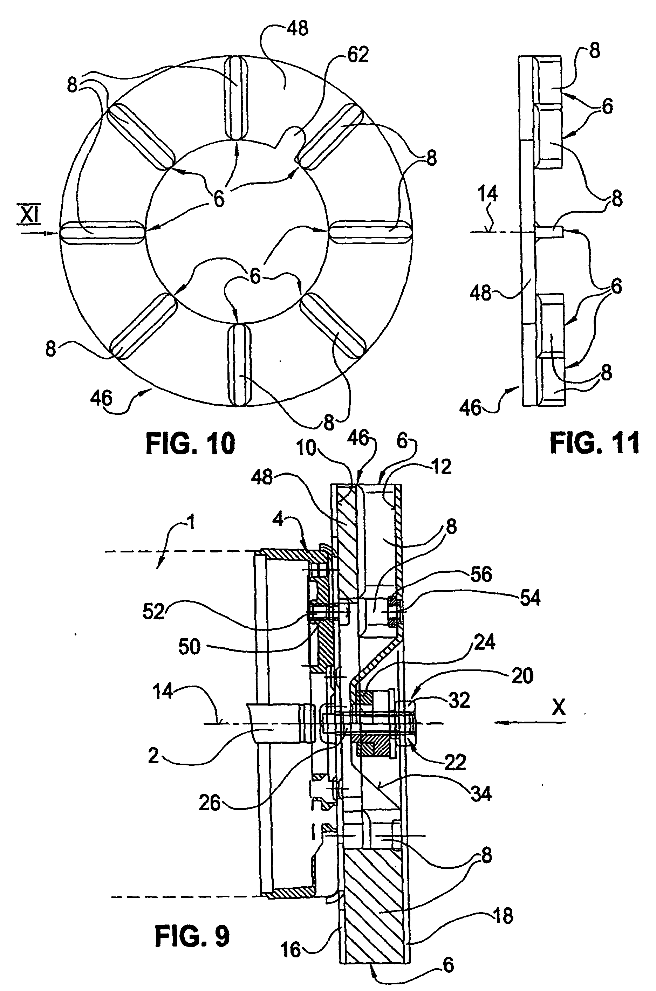

In Fig. 1 und 9 ist jeweils ein Elektromotor 1 lediglich schematisch angedeutet. Konkret dargestellt sind nur ein Ende einer Motorwelle 2 sowie ein im wesentlichen scheibenförmiger Motorflansch 4. Über den Motorflansch 4 wird der Elektromotor 1 einseitig (fliegend) an einem nicht dargestellten Trägerteil befestigt. Diese Befestigung erfolgt zum Zweck der Schwingungsisolation mittelbar über mehrere über den Umfang des Elekromotors 1 verteilt angeordnete und aus elastischem Material bestehende Zwischenelemente 6.

Wie nun am besten in Fig. 2, 10 und 16 erkennbar ist, ist erfindungsgemäß vorgesehen, daß die Zwischenelemente 6 als längliche, radial ausgerichtete Stegelemente 8 ausgebildet sind. Gemäß Fig. 1 und 9 sind diese Stegelemente 8 axial zwischen einer motorseitigen Montagefläche 10 und einer trägerseitigen Befestigungsfläche 12 unter elastischer Vorspannung eingespannt angeordnet (kraftschlüssige Einspannung). Dabei sind die Stegelemente 8 bezüglich ihrer Form und der daraus resultierenden Elastizitätseigenschaften derart ausgelegt, daß die Verbindung zwischen dem Elektromotor 1 und dem jeweiligen Trägerteil in Umfangs- bzw. Drehrichtung des Motors gesehen weicher als in allen anderen Raumrichtungen bzw. Freiheitsgraden ist. Vor allem durch die radiale, sternartige Anordnung der Stegelemente 8 wird eine hohe Steifigkeit in axialer und radialer Richtung der Stegelemente 8 sowie auch in Kipprichtung der Drehachse (Verkippung um eine zur Drehachse senkrechte Querachse) erreicht. Im Gegensatz dazu tragen die Stegelemente 8 in Drehrichtung des Motors gesehen nur zu einem sehr geringen Teil zur Steifigkeit bei; es liegt eine relativ weichere Abstützung vor, die eine geringfügige Bewegung des Motors in Drehrichtung zuläßt. Es handelt sich somit um eine "verdrehweiche" Befestigung, die aber relativ fest in axialer und radialer Richtung ist. Die erfindungsgemäße axiale Einspannung der Stegelemente 8 führt dazu, daß bei Belastungen in beliebigen Richtungen vorwiegend Schub- oder Druckspannungen auftreten. Bei einem Verkippen des Elektromotors 1 z. B. aufgrund der Gewichtskraft bei horizontaler Wellenlage, treten in den jeweils unteren Stegelementen 8 erhöhte Druckspannungen auf und in den nach oben weisenden Stegelementen 8 vermindert sich die durch die Vorspannung erzeugte Druckspannung. Die Ersatzsteifigkeit der Gesamtanordnung in Drehrichtung tendiert im Grenzfall zur Degression, was für die schwingungsisolierende Wirkung zusätzlich von Vorteil ist. Durch die Druckvorspannung der elastischen Stegelemente 8 wird eine relativ hohe Lageunabhängigkeit erreicht. Zusätzliche Verformungen, beispielsweise in Kipprichtung um die senkrecht zur Motorachse verlaufende Querachse, werden durch eine bei Druckbelastung von elastomeren Werkstoffen auftretende Progressivität minimal gehalten.

In den dargestellten Ausführungsbeispielen sind jeweils die Montagefläche 10 und die Befestigungsfläche 12 zueinander im wesentlichen parallel sowie senkrecht zur Motorachse 14 angeordnet. Die Stegelemente 8 sind in radialsymmetrischer Verteilung (sternartig) angeordnet. Je nach Größe und Gewicht des zu halternden Elektromotors 1 können drei bis etwa zwölf, insbesondere sechs bis zehn Stegelemente 8 vorhanden sein. In den dargestellten Beispielen handelt es sich um jeweils acht Stegelemente 8. Ferner ist die motorseitige Montagefläche 10 bevorzugt von einem an dem Elektromotor 1 befestigten, insbesondere aus Metallblech bestehenden Scheibenelement 16 gebildet. Alternativ kann allerdings auch der Motorflansch 4 unmittelbar die Montagefläche 10 bilden, so daß ein zusätzliches Scheibenelement entbehrlich wäre. Vorzugsweise ist auch die trägerseitige Befestigungsfläche 12 von einem gesonderten, zweiten Scheibenelement 18 gebildet. Auch hier kann als Alternative vorgesehen sein, als Befestigungsfläche 12 eine Oberfläche des jeweiligen Trägerteils selbst zu verwenden. In diesem Fall wäre folglich das jeweilige Trägerteil Bestandteil der erfindungsgemäßen Anordnung. In dem bevorzugten Ausführungsbeispiel besteht auch das zweite Scheibenelement 18 bevorzugt aus Metallblech.

Die beiden Scheibenelemente 16 und 18 sind über Spannmittel 20 schwingungsisolierend axial gegeneinander verspannbar. Als Spannmittel 20 ist vorzugsweise eine zentrische Verschraubung 22 vorgesehen (siehe insbesondere Fig. 1 und 9), wobei die Scheibenelemente 16 und 18 über diese Verschraubung 22 und über ein elastisches Ringelement 24 definiert verspannbar sind, d. h. mit einer definierten axialen Spannkraft. Gemäß Fig. 1 ist hierzu mit dem ersten Scheibenelement 16 ein Schraubbolzen 26 verbunden, der sich axial und frei, berührungslos durch eine zentrische Öffnung des zweiten Scheibenelementes 18 hindurch erstreckt. Endseitig trägt der Schraubbolzen 26 eine Druckscheibe 28. Axial zwischen dieser Druckscheibe 28 und dem zweiten Scheibenelement 18 ist das elastische Ringelement 24 angeordnet. Ferner befindet sich zwischen der Druckscheibe 28 und dem ersten Scheibenelement 16 eine formstabile Distanzhülse 30, die ebenfalls berührungslos die zentrische Öffnung des zweiten Scheibenelementes 18 durchgreift. Auf das freie Ende des Schraubbolzens 26 ist eine Schraubmutter 32 aufgeschraubt, mit der die Druckscheibe 28 gegen das elastische Ringelement 24 verspannt werden kann, bis durch Anlage an der Distanzhülse 30 eine definierte Spannung erreicht ist. Die Distanzhülse 30 ist bezüglich ihrer axialen Länge in Anpassung an die elastischen Eigenschaften des elastischen Ringelementes 24 derart ausgelegt, daß die erfindungsgemäßen Stegelemente 8 mit der jeweils gewünschten Vorspannung beaufschlagt werden. Durch die beschriebene Ausgestaltung der Spannmittel 20 bzw. der zentrischen Verschraubung 22 sind auch in diesem Bereich die beiden Scheibenelement 16, 18 nicht unmittelbar, sondern schwingungsisolierend über das elastische Ringelement 24 verbunden. Dabei weist das zweite Scheibenelement 18 in seinem zentrischen Bereich vorzugsweise einen verkröpften Bereich zur Bildung einer zentrischen Vertiefung 34 derart auf, daß in dieser Vertiefung 34 das elastische Ringelement 24 versenkt angeordnet ist.

Die vorstehende Beschreibung gilt analog oder ähnlich auch für die Ausführungsform der Fig. 9.

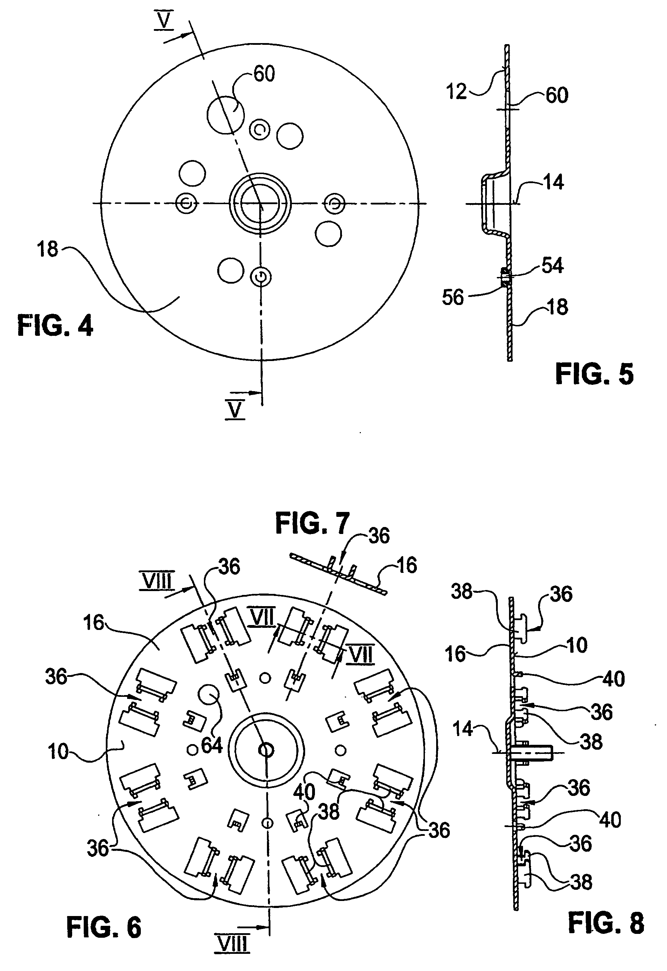

Was nun speziell die Ausführungsform gemäß Fig. 1 bis 8 betrifft, so sind hierbei die einzelnen Stegelemente 8 motorseitig auf der Montagefläche 10 vorfixiert gehaltert. Alternativ könnte allerdings auch eine entsprechende Halterung auf der gegenüberliegenden Seite der trägerseitigen Befestigungsfläche 12 vorgesehen sein. Im bevorzugten Ausführungsbeispiel sitzt jedes Stegelement 8 in einer Halteaufnahme 36 des motorseitigen, ersten Scheibenelementes 16 (siehe hierzu auch Fig. 6, 7 und 8). Zweckmäßigerweise sind die Halteaufnahmen 36 jeweils durch zwei aus dem Blechmaterial des Scheibenelementes 16 freigeschnittene und senkrecht hochgebogene, stegartige und zueinander parallele Blechlaschen 38 gebildet. Jedes elastische Stegelement 8 sitzt zumindest kraftschlüssig, klemmend zwischen den Blechlaschen 38 der jeweiligen Halteaufnahme 36. Es kann auch eine formschlüssige oder zumindest kraftformschlüssige Befestigung vorgesehen sein, indem nach dem Einsetzen des jeweiligen Stegelementes 8 die Blechlaschen 38 noch weiter nach innen gebogen werden. Zur Abstützung der Stegelemente 8 in radialer Richtung nach innen sind vorzugsweise Anschläge 40 vorgesehen, die zweckmäßigerweise ebenfalls durch freigeschnittene und hochgebogene Blechlaschen gebildet sind. Entsprechende Anschläge könnten - in Abweichung von dem dargestellten Beispiel - auch in radialer Richtung nach außen vorgesehen sein.

Die bei der Ausführungsform nach Fig. 1 bis 8 verwendeten Stegelemente 8 weisen gemäß Fig. 3 jeweils einen doppel-Tförmigen Stegquerschnitt mit zwei von in Richtung der Motorachse 14 gegenüberliegenden T-Querstegen gebildeten, breiteren Anlageabschnitten 42 sowie einem von einem T-Längssteg gebildeten, schmaleren Verbindungsabschnitt 44 auf. Mit den beiden Anlageabschnitten 42 liegen die Stegelemente 8 an den gegenüberliegenden Montage- bzw. Befestigungsflächen 10, 12 an.

Die Ausführungsform nach Fig. 9 bis 15 unterscheidet sich hauptsächlich darin, daß die Stegelemente 8 Bestandteile eines einstückigen, elastischen Schwingungs-Isolationselementes 46 sind, wobei die Stegelemente 8 insbesondere auf einer Seite einer ringscheibenförmigen Basisscheibe 48 angeformt sind (siehe insbesondere Fig. 10 und 11). Die Basisscheibe 48 liegt bevorzugt an der motorseitigen Montagefläche 10 an, während die Stegelemente 8 mit ihren freien, radialen Anlageflächen an der trägerseitigen Befestigungsfläche 12 anliegen. Grundsätzlich könnte aber auch eine umgekehrte Anordnung vorgesehen sein. Bei dieser Ausführung weisen die Stegelemente 8 bevorzugt jeweils einen im wesentlichen rechteckigen Stegquerschnitt auf.

Allgemein sei bemerkt, daß durch die Querschnittsgeometrie der Stegelemente 8 die elastischen Eigenschaften der Motoraufhängung insbesondere in Drehrichtung in weiten Bereichen beeinflußt werden kann. So sind bei beiden Ausführungsformen nahezu beliebige Stegquerschnitte möglich, beispielsweise auch ein Pyramidenstumpf. Darüber hinaus sind bei einer Ausführungsform der erfindungsgemäßen Anordnung auch Kombinationen unterschiedlich ausgestalteter Stegelemente 8 möglich. So könnte beispielsweise bei der Ausführung nach Fig. 1 bis 8 anstelle des in Fig. 3 veranschaulichten Querschnitts auch eine Querschnittsform vorgesehen sein, bei der der trägerseitige Anlageabschnitt 42 fehlt.

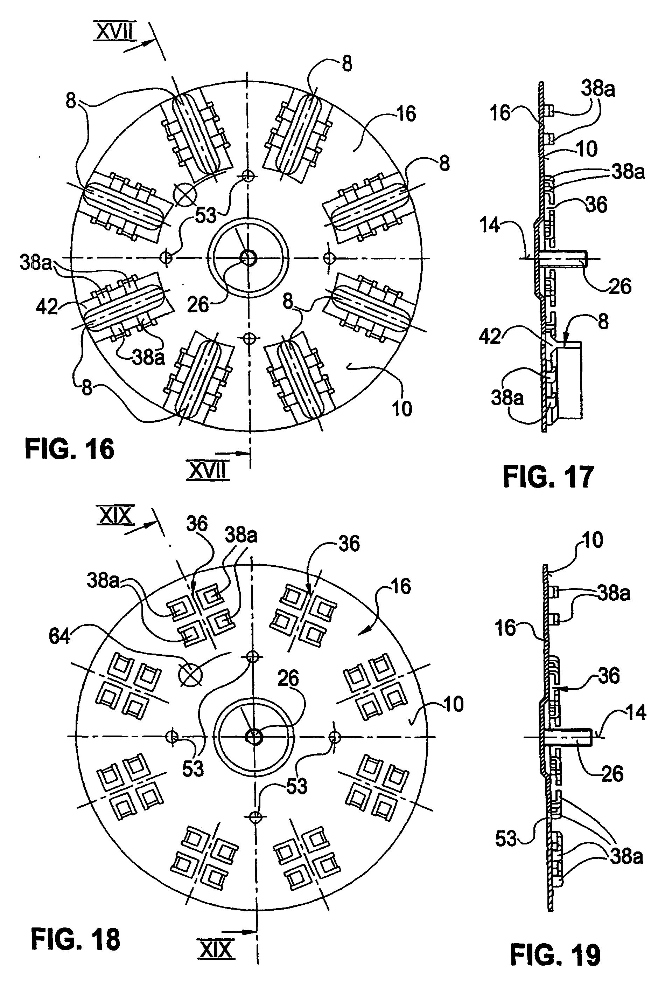

Eine solche Form ist beispielhaft bei der Variante nach Fig. 16 bis 19 dargestellt. Dabei ist zudem vorgesehen, daß jedes Stegelement 8 in der zugehörigen Halteaufnahme 36 auch formschlüssig gehalten ist. Dazu wird jede Halteaufnahme 36 von Haltestegen 38a begrenzt, die mit nach innen aufeinanderzu umgebogenen Enden jeweils den Anlageabschnitt 42 des Stegelementes 8 hakenartig umgreifen. Vorzugsweise wird jede Halteaufnahme 36 von zweimal zwei paarweise gegenüberliegenden Haltestegen 38a gebildet. Jedes Stegelement 8 wird in radialer Richtung von außen nach innen in die entsprechende Halteaufnahme 36, d. h. mit dem Abschnitt 42 zwischen die Haltestege 38a, eingeschoben.

Wie sich weiterhin aus Fig. 1 und 9 jeweils ergibt, ist das motorseitige erste Scheibenelement 16 mit dem Motorflansch 4 zweckmäßigerweise verschraubt. Üblicherweise besitzt der Motorflansch 4 Befestigungslöcher 50 insbesondere in Form von Gewindebohrungen, in die jeweils eine Schraube 52 eingreift, wobei die Schraube 52 ein Durchgangsloch 53 des Scheibenelementes 16 durchgreift. Das trägerseitige, zweite Scheibenelement 18 weist zur Verbindung mit dem nicht dargestellten Trägerteil entsprechende Montagelöcher 54 auf, deren Anordnung vorzugsweise der Lochanordnung des Motorflansches 4 entspricht. Hierdurch kann der Elektromotor 1 wahlweise mit oder ohne die erfindungsgemäße Schwingungsisolationsanordnung an dem Trägerteil befestigt werden. Die Montagelöcher 54 können - wie dargestellt - von in dem Blechteil gehalterten Einpreßmuttern 56 gebildet sein.

Es sei nochmals bemerkt, daß anstelle eines trägerseitigen, gesonderten Scheibenelementes auch eine Integration mit dem jeweiligen Trägerteil vorgesehen sein kann, d. h. die Befestigungsfläche 12 kann bereits vor der Motormontage Bestandteil des Trägerteils sein.

Eine Verdrehsicherung des Elektromotors 1 relativ zu dem Trägerteil wird erfindungsgemäß hauptsächlich durch Haftreibung im Bereich der axial eingespannten Stegelemente 8 gewährleistet. Allerdings können mit Vorteil auch zusätzliche Formschlußelemente zum Ineinandergreifen als Sicherung gegen Verdrehen und/oder zur Zentrierung zwischen dem Elektromotor 1 und dem Trägerteil vorgesehen sein. Solche Elemente sind in den Zeichnungsfiguren nicht dargestellt.

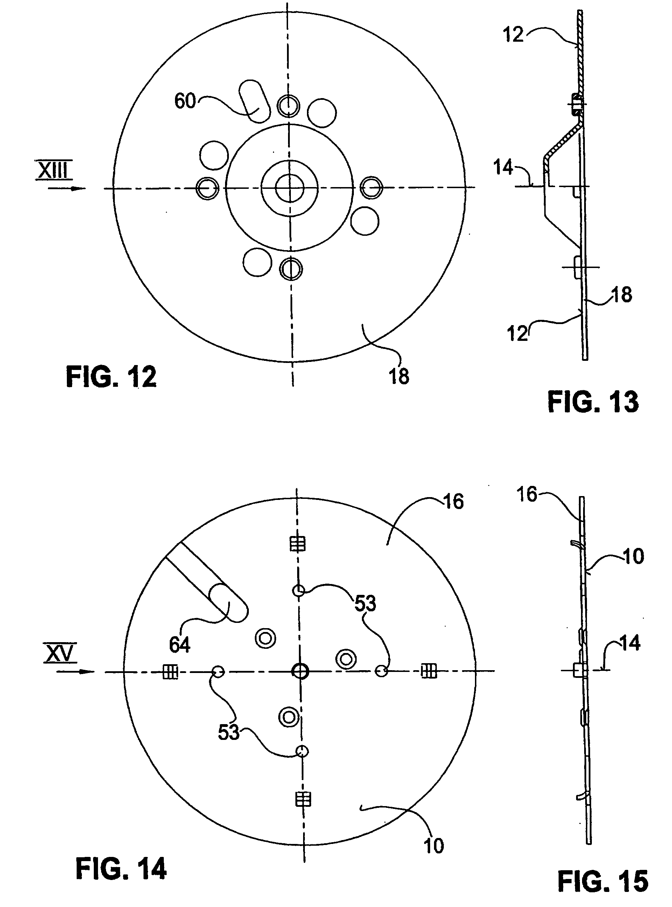

Wie sich noch z. B. aus Fig. 4 und 5 5 ergibt, kann das zweite Scheibenelement 18 eine Lochöffnung 60 zum Durchführen eines nicht dargestellten Motorkabels aufweisen (vgl. auch Fig. 12). Auch das einstückige Isolationselement 46 nach Fig. 10 kann in seiner Basisscheibe 48 eine Ausnehmung 62 zur Kabeldurchführung aufweisen. Schließlich kann eine entsprechende Kabelöffnung 64 auch in dem ersten Scheibenelement 16 gebildet sein (vgl. z. B. Fig. 6, 14 und 18).

Die Erfindung ist nicht auf die konkret dargestellten und beschriebenen Ausführungsbeispiele beschränkt, sondern auf die im Anspruch 1 definierte Merkmalskombination Beispielsweise könnte anstatt des aus gummielastischem Material bestehenden, zentrischen Ringelementes 24 auch ein Federelement aus einem anderen Federwerkstoff eingesetzt werden. Wesentlich ist hier nur, daß auch in diesem zentrischen Bereich eine Schwingungsentkopplung bei gleichzeitiger Spannfunktion gewährleistet ist.

## Patentansprüche

1. Anordnung zur schwingungsisolierenden Halterung eines Elektromotors (1) an einem Trägerteil über mehrere über den Umfang verteilt angeordnete, aus elastischem Material bestehende Zwischenelemente (6), wobei die Zwischenelemente (6) als längliche, radial ausgerichtete Stegelemente (8) ausgebildet und axial zwischen einer motorseitigen Montagefläche (10) und einer trägerseitigen Befestigungsfläche (12) angeordnet sind, und wobei die motorseitige Montagefläche (10) von einem am Elektromotor (1) befestigten ersten Scheibenelement (16) und die trägerseitige Befestigungsfläche (12) von einem zweiten Scheibenelement (18) gebildet sind,
**dadurch gekennzeichnet,**
**dass** die Stegelemente (8) dadurch axial zwischen der Montagefläche (10) und der Befestigungsfläche (12) unter elastischer Vorspannung eingespannt angeordnet sind, dass die beiden Scheibenelemente (16, 18) über Spannmittel (20) schwingungsisolierend axial gegeneinander verspannbar sind.

2. Anordnung nach Anspruch 1,
**dadurch gekennzeichnet,**
**daß** die Stegelemente (8) derart angeordnet und bezüglich ihrer Elastizitätseigenschaften derart ausgelegt sind, daß die Verbindung zwischen dem Elektromotor (1) und dem Trägerteil in Umfangs- bzw. Drehrichtung des Motors gesehen weicher als in allen anderen Raumrichtungen ist.

3. Anordnung nach Anspruch 1 oder 2,
**dadurch gekennzeichnet,**
**daß** die Montagefläche (10) und die Befestigungsfläche (12) zueinander im wesentlichen parallel und senkrecht zur Motorachse (14) angeordnet sind.

4. Anordnung nach einem der Ansprüche 1 bis 3,
**dadurch gekennzeichnet,**
**daß** die Stegelemente (8) in einer radialsymmetrischen Verteilung angeordnet sind.

5. Anordnung nach einem der Ansprüche 1 bis 4,
**dadurch gekennzeichnet,**
**daß** drei bis zwölf, insbesondere sechs bis zehn, Stegelemente (8) vorhanden sind.

6. Anordnung nach einem der Ansprüche 1 bis 5,
**dadurch gekennzeichnet,**
**daß** der erste Scheibenelement (16) aus Metall besteht.

7. Anordnung nach einem der Ansprüche 1 bis 6,
**dadurch gekennzeichnet,**
**daß** das zweite Scheibenelement aus Metall besteht.

8. Anordnung nach einem der Ansprüche 1 bis 7,
**dadurch gekennzeichnet,**
**daß** die Scheibenelemente (16, 18) über eine zentrische Verschraubung (22) und über ein elastisches Ringelement (24) definiert verspannbar sind.

9. Anordnung nach einem der Ansprüche 1 bis 8,
**dadurch gekennzeichnet,**
**daß** die einzelnen Stegelemente (8) motorseitig oder trägerseitig vorfixiert gehaltert sind, und zwar insbesondere in Halteaufnahmen (36) des motorseitigen Scheibenelementes (16).

10. Anordnung nach einem der Ansprüche 1 bis 8,
**dadurch gekennzeichnet,**
**daß** die Stegelemente (8) Teile eines einstückigen, elastischen Isolationselementes (46) sind, wobei die Stegelemente (8) insbesondere auf einer Seite einer Basisscheibe (48) angeformt sind.

11. Anordnung nach einem der Ansprüche 1 bis 10,
**dadurch gekennzeichnet,**
**daß** die Stegelemente (8) jeweils einen doppel-Tförmigen Stegquerschnitt mit zwei von axial gegenüberliegenden T-Querstegen gebildeten, breiteren Anlageabschnitten (42) und einem von einem T-Längssteg gebildeten schmaleren Verbindungsabschnitt (44) aufweisen.

12. Anordnung nach einem der Ansprüche 1 bis 11,
**dadurch gekennzeichnet,**
**daß** die Stegelemente (8) jeweils einen im wesentlichen rechteckigen Stegquerschnitt aufweisen.

13. Anordnung nach einem der Ansprüche 1 bis 11,
**dadurch gekennzeichnet,**
**daß** die Stegelemente (8) jeweils einen etwa T-förmigen Querschnitt mit einem insbesondere der Motorseite zugekehrten verbreiterten Anlageabschnitt (42) aufweisen.

14. Anordnung nach einem der Ansprüche 6 bis 13,
**dadurch gekennzeichnet,**
**daß** das motorseitige Scheibenelement (16) mit einem Motorflansch (4) des Elektromotors (1) verbunden, insbesondere verschraubt ist.

15. Anordnung nach einem der Ansprüche 7 bis 14,
**dadurch gekennzeichnet,**
**daß** das trägerseitige Scheibenelement (18) zur Verbindung mit dem Trägerteil Montagelöcher (54) aufweist, deren Anordnung vorzugsweise einer Lochanordnung des/eines Motorflansches (4) des Elektromotors (1) entspricht.

16. Anordnung nach einem der Ansprüche 1 bis 15,
**gekennzeichnet durch** Formschlußelemente zur zusätzlichen Sicherung gegen Verdrehen und/oder zur Zentrierung zwischen dem Elektromotor (1) und dem Trägerteil.

## Claims

1. Arrangement for vibration-insulating holding of an electric motor (1) on a carrier part via several intermediate elements (6) arranged distributed about the periphery and made of elastic material, where the intermediate elements (6) are formed as longitudinal, radially aligned web elements (8) and are arranged axially between a mounting surface (10) on the motor side and a fixing surface (12) on the carrier side, and where the mounting surface (10) on the motor side is formed by a first disc element (16) attached to the electric motor (1) and the fixing surface (12) on the carrier side is formed by a second disc element (18), **characterised in that** the web elements (8) are arranged clamped axially between the mounting surface (10) and the fixing surface (12) under elastic pretension, while the two disc elements (16, 18) can be clamped axially together in vibration-insulating manner via clamping means (20).

2. Arrangement according to claim 1, **characterised in that** the web elements (8) are arranged such that and designed in relation to their elasticity properties such that the connection between the electric motor (1) and the carrier part viewed in the peripheral or rotation direction of the motor is softer than in all other spatial directions.

3. Arrangement according to claim 1 or 2, **characterised in that** the mounting surface (10) and the fixing surface (12) are arranged essentially parallel to each other and perpendicular to the motor axis (14).

4. Arrangement according to any of claims 1 to 3, **characterised in that** the web elements (8) are arranged in a radially symmetrical distribution.

5. Arrangement according to any of claims 1 to 4, **characterised in that** three to twelve, in particular six to ten web elements (8) are provided.

6. Arrangement according to any of claims 1 to 5, **characterised in that** the first disc element (16) consists of metal.

7. Arrangement according to any of claims 1 to 6, **characterised in that** the second disc element consists of metal.

8. Arrangement according to any of claims 1 to 7, **characterised in that** the disc elements (16, 18) can be clamped in a defined manner via a central screw fixing (22) and an elastic ring element (24).

9. Arrangement according to any of claims 1 to 8, **characterised in that** the individual web elements (8) are held prefixed on the motor side or carrier side in particular in the holding recesses (36) of the disc element (16) on the motor side.

10. Arrangement according to any of claims 1 to 8, **characterised in that** the web elements (8) are parts of a one-piece elastic insulation element (46), where the web elements (8) in particular are moulded on one side of a base plate (48).

11. Arrangement according to any of claims 1 to 10, **characterised in that** the web elements (8) each have double T-shaped web cross-section with two wider contact sections (42) formed by axially opposing T-crossbars and one narrower connecting section (44) formed by a T-upright.

12. Arrangement according to any of claims 1 to 11, **characterised in that** the web elements (8) each have an essentially rectangular web crone-section.

13. Arrangement according to any of claims 1 to 12, **characterised in that** the web elements (8) each have T-shaped cross-section with a wider contact surface (42) in particular facing the motor side.

14. Arrangement according to any of claims 6 to 13, **characterised in that** the disc element (16) on the motor side is connected, in particular screwed, to a motor flange (4) of the electric motor (1).

15. Arrangement according to any of claims 7 to 14, **characterised in that** the disc element (18) on the carrier side for connection with the carrier part has assembly holes (54), the arrangement of which corresponds preferably to a hole arrangement of the/a motor flange (4) of the electric motor (1).

16. Arrangement according to any of claims 1 to 15, **characterised by** form fit elements for additional security against twisting and/or for centring between the electric motor (1) and the carrier part.

## Revendications

1. Dispositif pour réaliser une fixation d'un abri des vibrations d'un moteur électrique (1) à un élément de support au moyen de plusieurs éléments intermédiaires (6) réalisés en matière élastique répartis sur la périphérie, les éléments intermédiaires (6) étant constitués par des éléments entretoises (8) de forme allongée, orientés radialement et disposés axialement entre une surface de montage (10) côté moteur et une surface de fixation (12) côté élément de support, et la surface de montage (10) côté moteur étant formée d'un premier élément en forme de disque (16) fixé au moteur électrique (1) et la surface de fixation (12) côté élément de support étant formée d'un deuxième élément en forme de disque (18),
**caractérisé en ce que** les éléments entretoises (8) sont disposés encastrés axialement sous précontrainte élastique entre la surface de montage (10) et la surface de fixation (12), **en ce que** les deux éléments en forme de disque (16, 18) peuvent être serrés axialement l'un contre l'autre de façon à les isoler des vibrations par des moyens de serrage (20).

2. Dispositif selon la revendication 1,
**caractérisé en ce que** les éléments entretoises (8) sont disposés, et conçus, sous le rapport de leurs propriétés d'élasticité, de telle manière que la liaison entre le moteur électrique (1) et l'élément de support soit plus souple, vu dans la direction périphérique ou dans la direction de la rotation du moteur, que dans toutes les autres directions de l'espace.

3. Dispositif selon la revendication 1 ou 2,
**caractérisé en ce que** la surface de montage (10) et la surface de fixation (12) sont disposées sensiblement parallèlement entre elles et perpendiculairement à l'axe (14) du moteur.

4. Dispositif selon l'une des revendications 1 à 3,
**caractérisé en ce que** les éléments entretoises (8) sont disposés dans une répartition à symétrie radiale.

5. Dispositif selon l'une des revendications 1 à 4,
**caractérisé en ce qu'**il est prévu trois à douze, en particulier six à dix, éléments entretoises (8).

6. Dispositif selon l'une des revendications 1 à 5,
**caractérisé en ce que** le premier élément en forme de disque (16) est en métal.

7. Dispositif selon l'une des revendications 1 à 6,
**caractérisé en ce que** le deuxième élément en forme de disque est en métal.

8. Dispositif selon l'une des revendications 1 à 7,
**caractérisé en ce que** les éléments en forme de disque (16, 18) peuvent être serrés d'une façon définie par un boulonnage central (22) et par un élément annulaire élastique (24).

9. Dispositif selon l'une des revendications 1 à 8,
**caractérisé en ce que** les différents éléments entretoises (8) sont attachés d'une façon préalablement immobilisée sur le côté moteur ou sur le côté élément de support, plus précisément dans des logements d'attache (36) de l'élément en forme de disque (16) côté moteur.

10. Dispositif selon l'une des revendications 1 à 8,
**caractérisé en ce que** les éléments entretoises (8) sont des parties d'un élément d'isolation élastique (46) en une seule pièce, les éléments entretoises (8) étant en particulier venus de formage sur un côté d'un disque de base (48).

11. Dispositif selon l'une des revendications 1 à 10,
**caractérisé en ce que** les éléments entretoises (8) présentent chacun une section d'entretoise en forme de double T comprenant deux segments d'appui (42) plus larges formés de barres transversales d'un T, opposées axialement et d'un segment de liaison (44) plus étroit, formé par une tige longitudinale du T.

12. Dispositif selon l'une des revendications 1 à 11,
**caractérisé en ce que** les éléments entretoises (8) présentent chacun une section d'entretoise sensiblement rectangulaire.

13. Dispositif selon l'une des revendications 1 à 12,
**caractérisé en ce que** les éléments entretoises (8) présentent chacun une section à peu près en forme de T qui possède un segment d'appui (42) élargi, dirigé en particulier vers le côté moteur.

14. Dispositif selon l'une des revendications 6 à 13,
**caractérisé en ce que** l'élément en forme de disque (16) côté moteur est assemblé, en particulier boulonné, à un flasque (4) du moteur électrique (1).

15. Dispositif selon l'une des revendications 7 à 14,
**caractérisé en ce que** l'élément en forme de disque (18) côté support présente, pour l'assemblage à l'élément de support, des trous de montage (54) dont la disposition correspond de préférence à une perforation du flasque ou d'un flasque (4) du moteur électrique (1).

16. Dispositif selonl' une des revendications 1 à 15,
**caractérisé par** des éléments opérant par sûreté de forme servant à une protection additionnelle à l'encontre de la torsion et/ou au centrage entre le moteur électrique (1) et l'élément de support.
